# EUROPEAN PATENT SPECIFICATION

(11) **EP 1 690 448 B1**
(45) Date of publication and mention of the grant of the patent: **19.03.2008**
(21) Application number: 05447022.4
(22) Date of filing: 11.02.2005
(51) Int. Cl.: A01G 9/02

(54) **Device for growing plants on a building façade**
Vorrichtung zur Bepflanzung einer Gebäudewand
Dispositif pour la culture de plantes sur une façade d'un bâtiment

(43) Date of publication of application: 16.08.2006
(73) Proprietor: Limeparts, 3600 Genk (BE)
(72) Inventor: Vaessen, Jos, 3650 Dilsen-Stokkem (BE)
(74) Representative: Sarlet, Steven Renaat Irène

(56) References cited:
- WO-A-88/06400
- DE-A1- 19 531 647
- FR-A- 2 747 265
- GB-A- 2 239 155

## Description

The present invention relates to a device for growing plants on a building façade according to the preamble of claim 1.

Such a device is for example known from FR-A-2747265. This document describes a device for growing plants on a vertical surface. The device comprises a vertical support structure onto which a water absorbing felt is attached. A protective wall is placed in front of the felt, which has openings through which plants can be grown on the felt.

The device known from FR-A-2747265 however has the disadvantage that a lot of the water which is supplied to the felt simply evaporates and that thus a high water consumption is necessary for enabling the plants to grow on the felt. As a result, the device of FR-A-2747265 is only applicable on façades facing north.

It is an aim of the present invention to provide a device for growing plants on a building façade which shows a reduced water consumption.

This aim is achieved according to the invention with a device showing the technical characteristics of the characterising part of the first claim.

The device for growing plants on a building façade according to the invention comprises at least one stack of superposed bins having a bottom and upstanding sides at the front and at the back. Each bin is filled with a water absorbing material up to the bottom of the superposed bin. This means that the water absorbing material which is provided in one bin contacts the bottom of the superposed bin.

In the device of the invention, the stack of bins filled with water absorbent material up to the bottom of the respective superposed bin has the effect that, in use, substantially a closed upstanding wall of water is created. The bins, being non-permeable to water, prevent that the water seeps down as is the case with the thin felt used in the prior art device. Furthermore, the wall of water shows a high thermal inertia, which severely reduces evaporation. The wall of water also forms an additional heat isolation in front of the building, keeping the warmth outside in the summer, also because the sunlight is absorbed by the plants. All this leads to a severe reduction in water consumption, which makes the device of the invention suitable for application on a larger number of façades, not only façades facing north.

The bins of the device of the invention preferably have a space at the front for accommodating a material for growing plants. This material can be the same as the water absorbing material or a different material, depending on the plants which one desires to grow on the device.

In one embodiment of the device of the invention, the stack of superposed bins extends substantially in vertical direction and the upstanding sides at the front of the bins extend in slanting direction towards the front. In this way, openings are created at the front between which the plants can grow. The stack of bins may however also extend in a slanting direction, for example between 45° and 90° with respect to horizontal.

The water supply to the bins is preferably located at the back side of the device. This has the advantage that the water supply is located behind the isolating wall of water, so on the side of lower temperature in the summer, which can further reduce the water consumption.

The upstanding sides at the back are constructed such that each bin except the uppermost bin is filled by overflow of the superposed bin. To this end, the upstanding sides at the back are provided with apertures which are located a predetermined distance above the bottom of the bins, chosen such that always a minimum amount of water remains in the bins, and spaced from the water absorbing material, so that the overflow is not hampered by this material. The overflow system simplifies the water supply as only the top bin has to be supplied directly, and its location at the back side of the device again has the advantage of being on the colder side which can reduce evaporation and hence water consumption.

In a preferred embodiment of the device of the invention, the water supply duct for supplying water to the uppermost bin of the stack is adapted for integration in a cavity wall of the building façade.

The water absorbing material in the bins is preferably provided in the form of blocks which have a bottom side resting on the bottom of one of the bins and a top side contacting the superposed bin, the bottom and/or top sides of the blocks being provided with recesses for accommodating expansion of water by freezing.

Preferably, each bin comprises at least one slit in one of its upstanding sides extending down to the bottom for enabling capillary overflow. Preferably, such slits are provided on the corners of the bins, which is easy to achieve in case of construction from a blank of sheet metal. These slits extending down to the bottom can ensure that no still water remains on the bottom of the bins, i.e. that there is always some flow, however slight, which can avoid deterioration of the water and thus the plants as a result of acidification or algal growth. It is understood that this capillary overflow has a much lesser flow rate than the overflow at the back side of the device for water supply and is only intended to avoid still water in the bins.

The invention will be further elucidated by means of the following description and the appended figures.
Figure 1 shows a perspective front view of a preferred embodiment of the device of the invention.
Figure 2 shows a more detailed perspective rear view of the device of figure 1.
Figure 3 shows a bin of the device of figure 1.
Figure 4 shows a cross section of the device of figure 1.

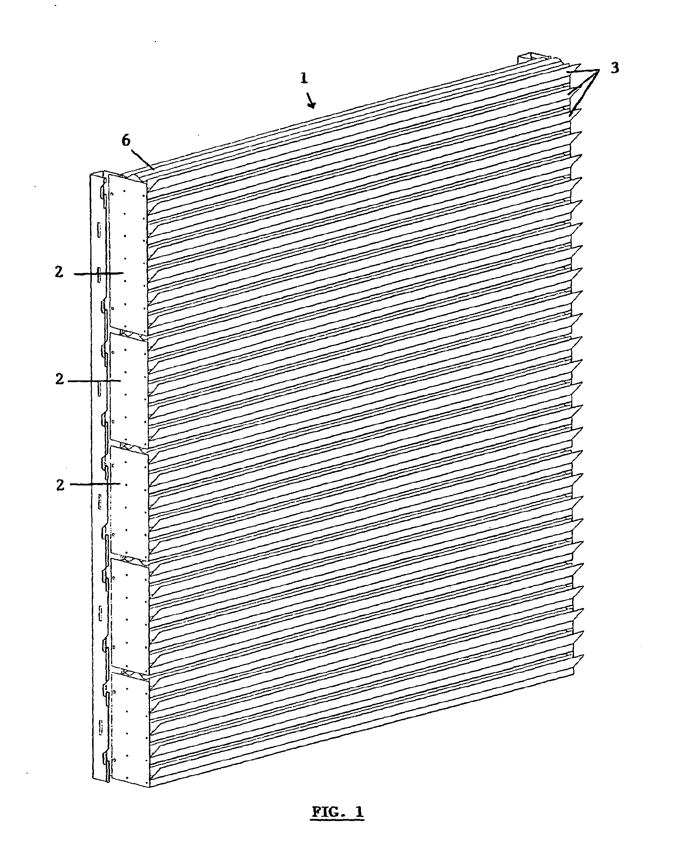

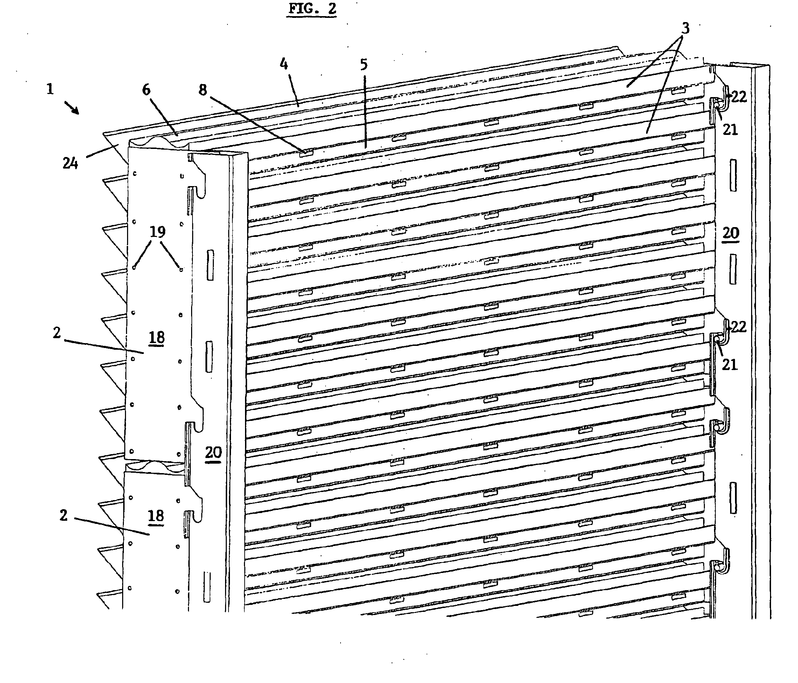

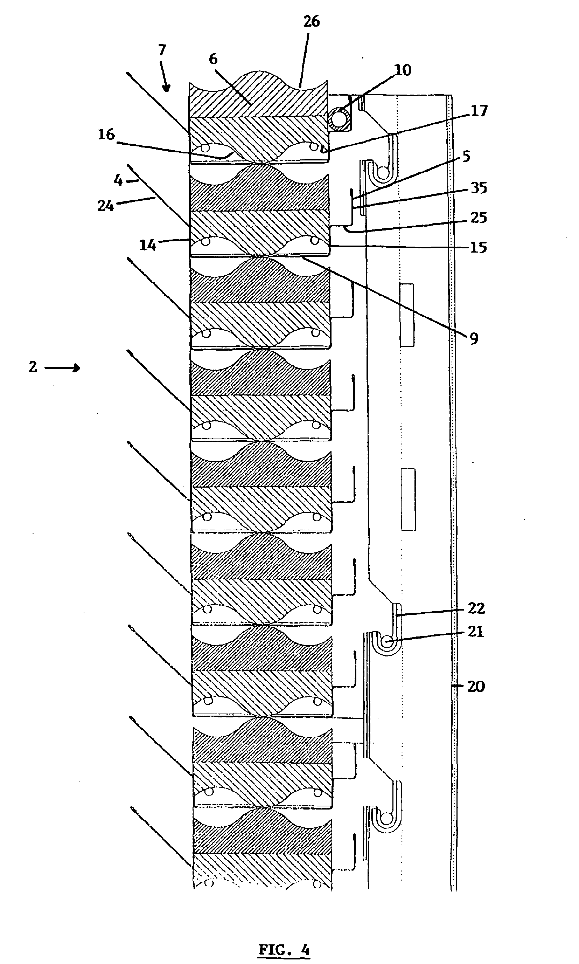

The device 1 for growing plants on a building façade of figures 1-4 comprises a number of modules 2, each forming a stack of superposed bins 3. Each of these bins 3 has a water impermeable bottom 9 and upstanding sides at the front 4 and at the back 5, each bin being filled with a block 6 of water absorbing material. The height of the blocks 6 is such that their top sides contact the superposed bin 3.

The front side 4 of each of the bins 3 has a lower part 14 which extends in height direction of the modules 2 and an upper part 24 which extends in a slanting direction to provide a space 7 at the front for accommodating a material for growing plants (not shown). The angle between the upper part 24 and the plane defined by the height direction of the module 2 is preferably about 45°, but may also be wider or narrower. The front sides 4 of the bins may also any have other shape deemed suitable to the person skilled in the art for obtaining the space 7 at the front, for example bow-shaped or simply straight in a slanting direction. The front side 4 of one bin may also be different from that of another bin.

The back sides 5 of the bins 3 are constructed such that each bin except the uppermost bin is filled by overflow of the superposed bin. In the embodiment shown, the back side 5 of each of the bins 3 has a stepwise construction with a lower part 15, a substantially horizontal part 25 and an upper part 35. The lower and upper parts 15, 35 extend in height direction with the lower part 15 having substantially the same height as the lower part 14 of the front side 4. In the lower part 15 a number of overflow apertures 8 are provided. The water in an upper bin can flow through these apertures and is caught by the rear part, formed by the parts 25 and 35, of the bin immediately underneath. In this way, the stepwise construction of the back sides 5 forms an overflow construction. The back sides 5 may however have any other shape suitable for overflow known to the person skilled in the art.

The overflow apertures 8 in the back side 5 is provided at a predetermined distance above the bottom 9 of the bin 3, so that always a minimum amount of water stays in the bin 3. The apertures 8 are furthermore spaced from the block 6 of water absorbing material, which is achieved by the form of the block 6: its bottom side 16 has a sinusoid shape with a recessed part 17 at the back. In this way, the overflow apertures 8 are not blocked by the water absorbing material 6 and overflow can occur unhampered.

In figure 1, the superposed modules 2 each forming a stack of superposed bins 3 form a device 1 which extends substantially in vertical direction. The modules 2 may however also be constructed such that the stacks of bins 3 in use extend in a slanting direction between 45° and 90° with respect to vertical. Furthermore, vertical modules 2 may be stepwise superposed, i.e. with each upper module being positioned more rearward than the module below it, so that a stepped device is formed. In short, the shapes of the modules 2 and the full device 1 may be adapted to the façade on which they are to be mounted, which may have any shape allowed by architecture.

In the device of figures 1-4, as a result of the overflow construction, which is not only present within each module 2 but also from one module to the one below, a single water supply duct 10 is sufficient. This duct 10 supplies water to the uppermost bin 3 of the uppermost module 2, and is conveniently formed by an tube with apertures placed in the rear part 25-35 of the uppermost bin 3, the tube 10 being connected to supply ducts which may conveniently be integrated in a cavity wall of the building façade (not shown).

As mentioned above, the water absorbing material in the bins is provided in the form of blocks 6 which have a bottom side 16 resting on the bottom 9 of one of the bins and a top side 26 contacting the superposed bin. The bottom and top sides 16, 26 of the blocks have sinusoid shapes and are thus provided with recesses for accommodating expansion of water by freezing. The width of the blocks 6 advantageously corresponds to the width of the bins 3, so that substantially the entire space between the lower parts 14 and 15 of the front and back sides 4 and 5 is filled with water absorbing material, to form a wall of water in use of maximal width enabled by the device 1. The water absorbing material is preferably polyurethane foam in which clay and plant growth stimulating substances are admixed, but may also be any other material known to the person skilled in the art, applied in the form of blocks or in granular form. The blocks 6 are however preferred for reasons of durability.

The material for growing plants which is in use applied in the frontal space 7 is preferably a substrate of non-biodegradable material (not shown), such as for example lava grains or charcoal, or a mixture thereof, or any other material known to the person skilled in the art. The non-biodegradability is preferred since the substrate is intended for supporting and holding the plants, whereas the blocks 6 behind the substrate are provided for nurturing the plants. This may however differ depending on the circumstances.

Each bin 3 comprises slits 11 at its corners which extend down to the bottom 9 for enabling capillary overflow. These slits 11 are conveniently achieved by the construction of the bins 3 from a blank of sheet metal: the sides 4, 5,12 and 13 are formed by plying so that automatically slits 11 of capillary width are formed at the corners. Since these slits 11 extend down to the bottom 9, it can be ensured that no still water remains on the bottom of the bins, i.e. that there is always some flow, however slight, which can avoid deterioration of the water and thus the plants as a result of acidification or algal growth.

The bins 3 are assembled onto side plates 18 to form the modules 2. The assemblage is performed by means of rivets 19 but may also be achieved by any other attachment means known to the person skilled in the art, such as for example bolts, screws, welding or glueing. The attachment to the side plates 18 together with the capillary overflow slits 11 at the corners of the bins 3 has the surprising effect that the capillary overflow droplets flow along the plates 18 right into the bin 3 immediately below.

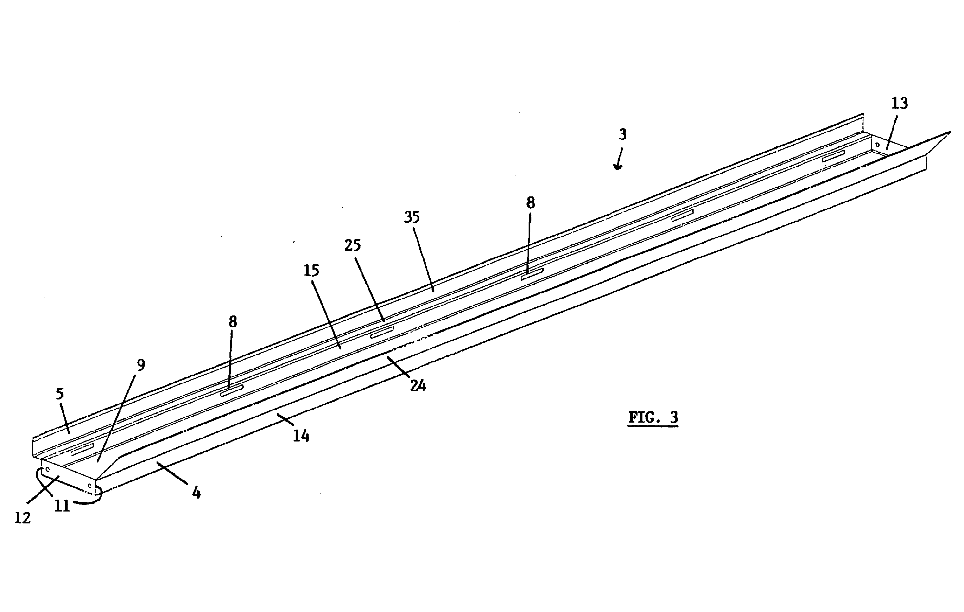

As mentioned above, the bins 3 shown in figure 3 are constructed from a blank of sheet metal by cutting and plying. The bins 3 may however also be constructed from any other material known to the person skilled in the art.

For forming the device 1, the modules 2 are suspended on a pair of support beams 20 which extend in height direction and have a U-profiled cross section. To this end, the side plates 18 of the modules 2 comprise suspension pens 21, which are snap-fitted into plastic suspension elements 22 fixed on the support beams 20. This suspension system enables dilatation of the bins 3 as a result of temperature variations. It is evident that any other suspension system deemed suitable by the person skilled in the art may be used.

In use, the device 1 functions as follows. Water is supplied to the uppermost bin 3 via the duct 10. This bin 3 is filled up to the level of the apertures 8, after which the bin 3 below is filled by overflow and so on. Water is absorbed by the blocks 6, but the water supply is controlled such that always a minimum amount of water remains on the bottom 9 of the bins. The control of the water supply to ensure this minimum level may be performed manually or by means of an automated sensor-controlled supply system. The water level is the bins 3 may vary according to weather circumstances and may rise up to the level of the apertures 8 as a result of rain or additional water supply via the duct 10, or fall (very slowly) as a result of capillary overflow via the slits 11.

## Claims

1. Device (1) for growing plants on a building façade, comprising at least one stack (2) of superposed bins (3) having a water impermeable bottom (9) and upstanding sides at the front (4) and at the back (5), each bin being filled with a water absorbing material (6) up to the bottom (9) of the superposed bin (3), **characterised in that** the upstanding sides (5) at the back are constructed such that each bin (3) except the uppermost bin is filled by overflow of the superposed bin, each bin comprising at least one overflow aperture (8) in the back side (5) at a predetermined distance above the bottom (9) and spaced from the water absorbing material (6).

2. Device according to claim 1, **characterised in that** the bins (3) have a space (7) at the front for accommodating a material for growing plants.

3. Device according to claim 2, **characterised in that** the stack (2) of superposed bins (3) extends substantially in vertical direction and that the upstanding sides (4) at the front of the bins extend at least partly in slanting direction towards the front to provide said space (7).

4. Device according to any one of the previous claims, **characterised in that** the device (1) further comprises a water supply duct (10) for supplying water to at least the uppermost bin (3) of the stack (2), the water supply duct being adapted for integration in a cavity wall of the building façade.

5. Device according to any one of the previous claims, **characterised in that** the water absorbing material in the bins is provided in the form of blocks (6) which have a bottom side (16) resting on the bottom of one of the bins and a top side (26) contacting the superposed bin, the bottom and/or top sides of the blocks being provided with recesses for accommodating expansion of water by freezing.

6. Device according to any one of the previous claims, **characterised in that** each bin (3) comprises at least one slit (11) in one of its upstanding sides extending down to the bottom (9) for enabling capillary overflow.

7. Device according to claim 6, **characterised in that** the slits (11) are provided at side plates (18) extending in height direction and interconnecting the bins (3).

## Patentansprüche

1. Vorrichtung (1) zur Bepflanzung einer Gebäudefrontwand mit mindestens einem Stapel (2) überlagernder Behälter (3), die einen wasserundurchlässigen Boden (9) aufweisen und aufrechte Seiten an der Vorderseite (4) und an der Rückseite (5), wobei jeder Behälter mit einem wasserabsorbierenden Material (6) bis zum Boden (9) des überlagernden Behälters (3) gefüllt ist, **dadurch gekennzeichnet, dass** die aufrechten Seiten (5) an der Rückseite derart gestaltet sind, dass jeder Behälter (3), ausgenommen der höchste Behälter durch Überlaufen des überlagernden Behälters gefüllt wird, wobei jeder Behälter mindestens eine Überlauföffnung (8) in der Rückseite (5) in einem vorgegebenen Abstand über dem Boden (9) vom wasserabsorbierenden Material beabstandet umfasst.

2. Vorrichtung nach Anspruch 1, **dadurch gekennzeichnet, dass** die Behälter (3) einen Abstand (7) an der Vorderseite aufweisen, um einem Material zur Bepflanzung Platz zu bieten.

3. Vorrichtung nach Anspruch 2, **dadurch gekennzeichnet, dass** sich der Stapel (2) der überlagernden Behälter (3) im Wesentlichen in Senkrechtrichtung erstreckt und dass sich die aufrechten Seiten (4) an der Vorderseite der Behälter mindestens teilweise in abgeschrägter Richtung zur Stirnseite erstrecken, um den Abstand (7) bereitzustellen.

4. Vorrichtung nach einem der vorhergehenden Ansprüche, **dadurch gekennzeichnet, dass** die Vorrichtung (1) ferner ein Wasserversorgungsrohr (10) umfasst, um mindestens den höchsten Behälter (3) des Stapels (2) mit Wasser zu versorgen, wobei sich das Wasserversorgungsrohr zur Einbindung in eine Hohlwand der Gebäudewand eignet.

5. Vorrichtung nach einem der vorhergehenden Ansprüche, **dadurch gekennzeichnet, dass** das wasserabsorbierende Material in den Behältern in Form von Blöcken (6) vorgesehen ist, welche eine Unterseite (16), die auf dem Boden einer der Behälter ruht, und eine Oberseite (26), die in Kontakt mit dem überlagernden Behälter tritt, aufweist, wobei die Unter- und/oder Oberseiten der Blöcke mit Aussparungen versehen sind, die der Ausdehnung des Wassers beim Gefrieren Platz bieten sollen.

6. Vorrichtung nach einem der vorhergehenden Ansprüche, **dadurch gekennzeichnet, dass** jeder Behälter (3) mindestens einen Schlitz (11) in einer der aufrechten Seiten aufweist, der sich nach unten zum Boden (9) erstreckt, um ein kapillares Überlaufen zu ermöglichen.

7. Vorrichtung nach Anspruch 6, **dadurch gekennzeichnet, dass** die Schlitze (11) mit Seitenplatten (16) vorgesehen sind, die sich in Höhenrichtung erstrecken und die Behälter (3) untereinander verbinden.

## Revendications

1. Dispositif (1) pour la culture de plantes sur une façade de bâtiment, comprenant au moins un empilement (2) de caisses (3) superposées ayant un fond (9) imperméable à l'eau et des côtés debout à l'avant (4) et à l'arrière (5), chaque caisse étant remplie avec un matériau absorbant l'eau (6) jusqu'au fond (9) de la caisse (3) superposée, **caractérisé en ce que** les côtés debout (5) à l'arrière sont construits de telle manière que chaque caisse (3), à l'exception de la caisse le plus en haut, soit remplie par débordement de la caisse superposée, chaque caisse comprenant au moins une ouverture de débordement (8) dans le côté arrière (5) à une distance prédéterminée au-dessus du fond (9) et espacée du matériau absorbant l'eau (6).

2. Dispositif selon la revendication 1, **caractérisé en ce que** les caisses (3) ont un espace (7) à l'avant pour recevoir un matériau pour la culture de plantes.

3. Dispositif selon la revendication 2, **caractérisé en ce que** l'empilement (2) de caisses (3) superposées s'étend sensiblement dans le sens vertical et **en ce que** les côtés débout (4) à l'avant des caisses s'étendent au moins en partie dans une direction en oblique vers l'avant pour fournir ledit espace (7).

4. Dispositif selon l'une quelconque des revendications précédentes, **caractérisé en ce que** le dispositif (1) comprend en outre un conduit d'alimentation en eau (10) pour fournir de l'eau à au moins la caisse (3) le plus en haut de l'empilement (2), le conduit d'alimentation en eau étant adapté pour être intégré dans une paroi creuse de la façade de bâtiment.

5. Dispositif selon l'une quelconque des revendications précédentes, **caractérisé en ce que** le matériau absorbant l'eau dans les caisses est prévu sous forme de blocs (6) qui ont un côté inférieur (16) reposant sur le fond d'une des caisses et un côté supérieur (26) en contact avec la caisse superposée, les côtés inférieur et / ou supérieur des blocs étant munis d'évidements pour faire face à la dilatation de l'eau due au gel.

6. Dispositif selon l'une quelconque des revendications précédentes, **caractérisé en ce que** chaque caisse (3) comprend au moins une fente (11) dans un des côtes debout s'étendant vers le bas jusqu'au fond (9) pour permettre un débordement par capillarité.

7. Dispositif selon la revendication 6, **caractérisé en ce que** les fentes (11) sont prévues au niveau des plaques latérales (18) s'étendant dans le sens de la hauteur et interconnectant les caisses (3).
